# EUROPÄISCHE PATENTANMELDUNG

(11) **EP 1 329 670 A1**
(43) Veröffentlichungstag der Anmeldung: **23.07.2003**
(21) Anmeldenummer: 02001034.4
(22) Anmeldetag: 18.01.2002
(51) Int. Cl.: F24D 3/16, E04B 9/06

(54) **Montageverfahren für Rohrleitungsanordnungen und abgehängte Decken in Gebäuden**

(71) Anmelder: Reckzeh, Manfred, 63457 Hanau (DE)
(72) Erfinder: Reckzeh, Thomas, 63457 Hanau (DE)
(74) Vertreter: Blum, Rudolf Emil Ernst

(57) **Zusammenfassung**

Die Rohrleitungsanordnung (2, 5) wird an einer Gebäudedecke (1) befestigt. Die Abhänger (5) sind in ihrer Länge verstellbar damit die Rohrleitungen (2) entsprechend des vorgesehenen Deckenverlaufs ausgerichtet werden können. Die abgehängte Decke (3, 7, 8) muss deshalb selbst nicht mehr ausgerichtet werden und wird mit Abhängern (8) einer konstanten Länge an der Rohrleitungsandornung (2, 5) befestigt. Die Sprühkopfe (4) einer Sprinkleranlage sind an den Rohrleitungen (2) angeschlossen. Das untere Ende der Sprühköpfe (4) ist bündig in die abgehängte Decke (3, 7, 8) eingepasst, was durch die konstante Länge der Abhänger (8) entscheidend vereinfacht wird. Auf die genannte Weise wird die Montage einer abgehängten Decke vereinfacht, insbesondere in Verbindung mit einer Sprinkleranlage.

## Beschreibung

Die Erfindung betrifft ein Verfahren gemäss Oberbegriff des Anspruchs 1, eine abgehängte Decke gemäss Oberbegriff des Anspruchs 8, eine Sprinkleranlage gemäss Oberbegriff des Anspruchs 9, eine Temperieranlage gemäss Oberbegriff des Anspruchs 10, eine kombinierte Temperierund Sprinkleranlage gemäss Oberbegriff des Anspruchs 11, sowie ein Gebäude gemäss Oberbegriff des Anspruchs 20.

Eine Kombination von Rohrleitungen und abgehängter Decke ist z.B. aus DE-U-299 10 425 bekannt. Die Montage bleibt aber aufwendig. Rohrleitungen im Deckenbereich von Gebäuden werden unter anderem zum Heizen, zum Kühlen und/oder für Sprinkleranlagen verwendet. Es ist dabei möglich, zum Heizen, zum Kühlen und für die Speisung der Sprühköpfe der Sprinkleranlage dieselben Rohrleitungen zu verwenden. Eine solche kombinierte Anlage wird im Dokument DE-A-196 51 866 vorgeschlagen. Das Dokument beschreibt ein Verfahren zur kombinierten Zentralbeheizung und Brandbekämpfung in baulichen und technischen Objekten. Die Kombination von Heizung, Kühlung und Sprinkleranlage hat vor allem den Vorteil kostengünstig zu sein, weil Rohrleitungen gespart werden können. Die Sprinkleranlage kann natürlich auch nur mit einer Deckenheizung bzw. Kühlung kombiniert werden. Die Anordnung der Rohrleitungen im Deckenbereich wird jedoch ohnehin insbesondere bei Büroräumen bevorzugt, weil so die Böden für Telefon- und Computer-Verkabelungen genutzt werden können.

Die Rohrleitungen von Heiz-, Kühl- und/oder Sprinkleranlagen werden mit Abhängern in Mäander- oder Gitterform an der Gebäudedecke befestigt. Unabhängig von der Funktion der Rohrleitungen erweist sich die Montage der Rohrleitungen und der abgehängten Decke als schwierig. Die abgehängte Decke muss entsprechend bestimmter Vorgaben - in den meisten Fällen horizontal - ausgerichtet werden. Eventuelle Unebenheiten der Gebäudedecke müssen dabei ausgeglichen werden. Das Ausrichten kann z.B. mit in der Länge verstellbaren Abhängern erfolgen. Rohrleitungen im Deckenbereich behindern jedoch oft die Montage und insbesondere das Ausrichten der abgehängten Dekken, dies unter anderem dadurch, dass der Ort der Abhänger nicht mehr frei gewählt werden kann, weil Rohrleitungen im Weg sein können.

Je nach Funktion der Rohrleitungen gibt es zusätzliche Schwierigkeiten: Bei Heizanlagen werden an den Rohren Abstrahlbleche befestigt. Diese sind ebenfalls beim Abhängen der Decke im Weg. Bei Sprinkleranlagen kommt erschwerend hinzu, dass die abgehängte Decke Aussparungen für die Sprühköpfe haben muss, und dass diese Aussparungen präzise am unteren Ende der Sprühköpfe positioniert werden müssen. Die Sprühköpfe werden in der Praxis oft schlecht eingepasst, d.h. die Höhe des unteren Endes der Sprühköpfe und die Höhe der abgehängten Decke stimmen nicht überein. Bei der Montage von kombinierten Temperier- und Sprinkleranlagen summieren sich die Schwierigkeiten.

Es stellt sich daher die Aufgabe für die Motage der Rohrleitungen und der abgehängten Decken der eingangs genannten Art ein Verfahren zu finden, das die oben genannten Schwierigkeiten zumindest teilweise ausräumt oder vermeidet.

Diese Aufgabe wird mit dem Verfahren gemäss Anspruch 1 gelöst. Indem die Rohrleitungsanordnung zum Tragen der abgehängten Decke verwendet wird, ergibt sich eine deutliche Vereinfachung der Montage und eine Materialeinsparung, da keine zusätzliche Tragkonstruktion für die Decke benötigt wird.

Bevorzugterweise erfolgt die Montage der abgehängten Decke in konstantem Abstand an der zuvor ausgerichteten Rohrleitung.

Dazu können zur Deckenbefestigung insbesondere Abhänger mit einer im wesentlichen konstanten Länge verwendet werden, so dass kein Ausrichten der abgehängten Decke mehr notwendig ist. Es ist zudem möglich die konstante Länge der Abhänger so zu wählen, dass bei einer Sprinkleranlage die Höhe des unteren Endes der Sprühköpfe und die Höhe der abgehängten Decke übereinstimmen.

Es stellt sich weiter die Aufgabe, eine abgehängte Decke in Kombination mit einer Rohrleitungsanordnung zu schaffen, die eine besonders einfache Montage ermöglicht.

Dies wird bei einer abgehängten Decke gemäss Anspruch 8 erreicht.

Weiter stellt sich die Aufgabe eine abgehängte Decke in Kombination mit einer Sprinkleranlage, einer Temperieranlage oder einer kombinierten Sprinkler-/ Temperieranlage bereitzustellen, was mit den Ansprüchen 9 bzw. 10 bzw. 11 erreicht wird.

Ferner soll ein Gebäude mit einer Rohrleitungsanlage mit abgehängter Decke mit einfacher Montage derselben geschaffen werden. Dies wird mit Anspruch 20 erreicht.

Weitere Vorteile und bevorzugte Ausführungsbeispiele ergeben sich aus den abhängigen Ansprüchen, sowie aus der nun folgenden Beschreibung anhand der Figuren. Dabei zeigen:
Fig. 1 eine Ausführung einer Temperier- und Sprinkleranlage in einem Schnitt durch den Hohlraum zwischen Gebäudedecke und Decke parallel zu den Rohrleitungen,
Fig. 2 die Ausführung aus Fig. 1 in einem Schnitt durch den Hohlraums zwischen Gebäudedecke und abgehängter Decke senkrecht zu den Rohrleitungen,
Fig. 3 die Ausführung aus Fig. 1 in einem Schema, dass die Anordnung der Rohrleitungen und der T-Profile der abgehängten Decke zeigt.
Fig. 4 den Wasserkreislauf einer Ausführung der Erfindung.

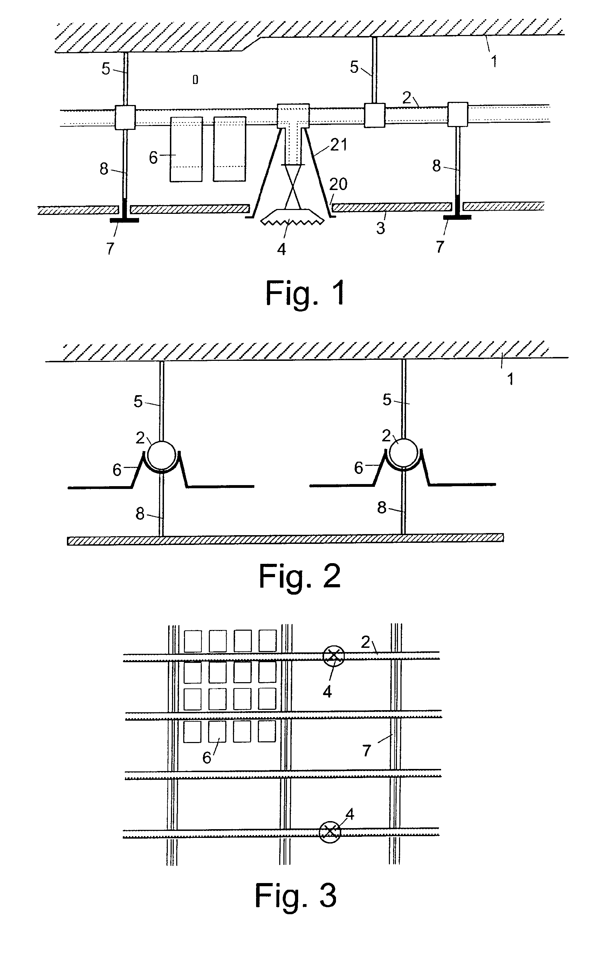

Im folgenden wird ein Beispiel der Erfindung anhand einer kombinierten Temperier- und Sprinkleranlage beschrieben. Die Ausführung der Erfindung ist jedoch mit einer beliebigen Rohrleitungsanordnung möglich. Eine mögliche Ausführung der erfindungsgemässen Ausgestaltung der Temperier- und Sprinkleranlage ergibt sich aus Figuren 1 bis 3. Der Begriff "Temperieranlage" umfasst in diesem Dokument Anlagen die entweder nur heizen, oder nur kühlen, oder sowohl heizen als auch kühlen können, indem entsprechend temperierte Flüssigkeit in den Rohrleitungen der Rohrleitungsanordnung zirkuliert.

Figur 1 zeigt eine Rohrleitungsanordnung 2, 5 die an den Wasserkreislauf der Temperier- und Sprinkleranlage angeschlossen ist. Sie umfasst beliebige Mittel, insbesondere Abhänger 5, mit welchen sie an der an der Gebäudedecke 1 befestigt ist. Die Mittel erlauben eine Einstellung des Abstandes der Rohre 2 von der Gebäudedekke 1, bzw. Abhänger 5 sind in ihrer Länge verstellbar, z.B. mit einem Gewinde, so dass es möglich ist die Rohre 2 der Rohrleitungsanordnung durch ein bekanntes Ausrichthilfsmittel, z.B. mittels Laser, auszurichten. In den meisten Fällen erfolgt die Ausrichtung horizontal, aber es ist auch eine geneigte Ausrichtung möglich. An der gezeigten Rohrleitung 2 ist ein Sprühkopf 4 montiert. Die abgehängte Decke 3, 7 ist mit weiteren Mitteln, z.B. mit Abhängern 8, an der Rohrleitung befestigt. Die Mittel bzw. die Abhänger 8 haben bevorzugt eine konstante Länge, die auf die Länge des Sprühkopfes 4 abgestimmt ist. Dies hat den Vorteil, dass der Sprühkopf 4 exakt in die Aussparung 20 der abgehängten Decken 3 passt und nicht vorsteht, was optisch stören würde, und auch nicht zu hoch liegt, was die Sprinklerfunktion beeinträchtigen würde. Eine konische Abdeckung 21 als separates Teil oder als Bestandteil des Sprühkopfes schliesst die Aussparung 20 ab. Die abgehängte Decke 3, 7, 8 ist z.B. mit T-Profilen 7 ausgestaltet, auf denen Deckenpaneele, bzw. Deckenkassetten 3 aufliegen. Die T-Profile sind orthogonal zu den Rohrleitungen abgehängt, so dass ihr Abstand untereinander entsprechend der Grösse der Deckenpaneele 3 gewählt werden kann. Die Deckenpaneele 3 können z.B. aus Karton, Gips oder Metall gebildet sein und insbesondere schalldämpfende Eigenschaften haben. An der Rohrleitung 2 sind Abstrahlbleche bzw. Lamellen 6 z.B. aus Aluminium befestigt, die einen besseren Wärmeaustausch zwischen dem Rohr und seiner Umgebung ermöglichen. Die Rohrleitung 2 kann vorzugsweise aus z.B. aus Stahl, Edelstahl oder Kupfer gebildet sein.

Die Mittel bzw. Abhänger 5 der Rohrleitungsanordnung, die zwischen Gebäudedecke 1 und Rohrleitung 2 angeordnet sind und die Mittel bzw. Abhänger 8 zwischen Rohrleitung 2 und T-Profil 7 können, aber müssen nicht am gleichen Ort an der Rohrleitung 2 befestigt sein. In der Figur sind beide Möglichkeiten dargestellt. Für die Befestigung der Abhänger 5, 8 am Rohr 2 werden Schellen verwendet.

Figur 2 zeigt dieselbe Ausführung wie Figur 1, jedoch in einem Schnitt senkrecht zu den Rohrleitungen 2. Die Lamellen bzw. Abstrahlbleche 6 sind von unten auf die Rohrleitungen aufgeklickt.

Figur 3 zeigt ein vereinfachtes Schema der Ausführung von Figuren 1 und 2 von der Gebäudedecke her gesehen. Die Rohrleitungen 2 und die T-Profile 7 sind orthogonal zu einander. Der Abstand zwischen den T-Profilen 7 ist entsprechend der Grösse der Deckenpaneele 3 gewählt. Auf den Rohren 2 sind Lamellen 6 aufgeklickt.

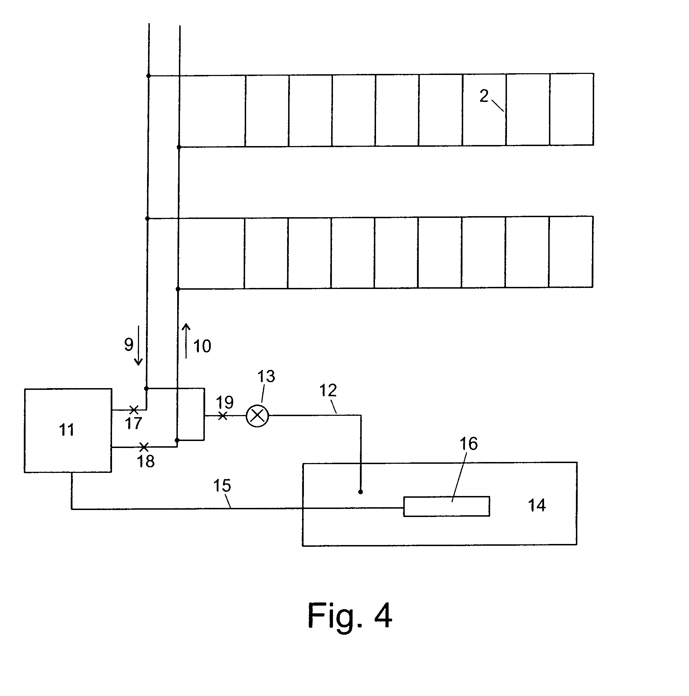

Figur 4 zeigt den Wasserkreislauf einer Ausführung der erfindungsgemässen Temperier- und Sprinkleranlage. Von der Temperiereinheit 11 gelangt das Wasser durch den Vorlauf 10 zu den im Deckenbereich der Räume verlegten Rohrleitungen 2, die wie gezeigt leiterförmig oder auch mäanderförmig verlegt sein können. Im Brandfall wird das Absperrventil 19 geöffnet und die Pumpe 13 pumpt Wasser aus dem Vorratsbehälter 14 durch Vor- und Rücklauf zu den Sprühköpfen die an den Rohrleitungen 2 angeschlossen sind. Dadurch, dass Vor- und Rücklauf benützt werden kann der Durchmesser der einzelnen Rohre kleiner gewählt werden. Die Rückschlagventile 17 und 18 verhindern, dass die Temperieranlage 11 im Brandfall durch den erhöhten Druck beschädigt wird. Der Wasservorratsbehälter 14 kann zugleich als Wärmespeicher für die Temperieranlage 11 genutzt. Dazu befindet sich im Vorratsbehälter 14 ein Wärmetauscher 16, der mit der Temperieranlage 11 über Kühlwasserleitungen 15 verbunden ist. Dadurch, dass nur für einen einzigen Wasserkreislauf Rohre verlegt werden müssen, können die Installations- und Materialkosten der Anlage gesenkt werden.

Die Montage der abgehängten Decke wird auf die erfindungsgemässe Weise sehr vereinfacht. Zunächst werden die Rohre 2 der Rohrleitungsanordnung mit deren Aufhängemitteln 5 verlegt, wobei dabei diese Mittel zur Ausrichtung der Rohrleitung 2 gut zugänglich sind. Danach braucht nur die abgehängte Decke an den Rohren befestigt werden. Diese Montage spart erheblich Material gegenüber der bekannten Verwendung einer separaten Tragkonstruktion für die abgehängte Decke. Eine besondere Ersparnis an Arbeitszeit ergibt sich, wenn - wie bevorzugt - die abgehängte Decke in konstantem Abstand an der Rohrleitung befestigt wird. Damit entfällt das separate Justieren der abgehängten Decke. Dies ist besonders vorteilhaft bei einer Sprinkleranlage, da bei Abstimmung des konstanten Abstandes mit der Länge der Sprühköpfe deren Lage zur Decke sich automatisch richtig ergibt. Die Montagemittel 8 können einmal in korrekter Länge gewählt werden und garantieren dann eine fehlerfreie, die richtige Sprühkopfeinpassung in die abgehängte Decke ergebende Montage.

## Patentansprüche

1. Verfahren zur Montage einer Rohrleitungsanordnung (2, 5) und einer abgehängten Decke (3, 7, 8) an einer Gebäudedecke (1), **dadurch gekennzeichnet, dass** die Rohrleitungsanordnung (2, 5) an der Gebäudedecke (1) befestigt wird, und dass die abgehängte Decke (3, 7, 8) an der Rohrleitungsanordnung (2, 5) befestigt wird.

2. Verfahren gemäss Anspruch 1, **dadurch gekennzeichnet, dass** die Rohrleitungsanordnung gemäss dem vorgesehenen Verlauf der abgehängten Decke (3, 7, 8) ausgerichtet und die abgehängte Decke an der Rohrleitungsanordnung in im wesentlichen konstanten Abstand von derselben angeordnet wird.

3. Verfahren gemäss Anspruch 1 oder 2, **dadurch gekennzeichnet, dass** die Rohrleitungsanordnung (2, 5) Teil einer Sprinkleranlage ist und Sprühköpfe (4) umfasst, und dass die Decke (3, 7, 8) Ausnehmungen (20) für die Sprühköpfe (4) aufweist.

4. Verfahren gemäss Anspruch 1 oder 2, **dadurch gekennzeichnet, dass** die Rohrleitungsanordnung (2, 5) Teil einer Heizung und/oder Kühlung ist.

5. Verfahren gemäss Anspruch 1 oder 2, **dadurch gekennzeichnet, dass** die Rohrleitungsanordung (2, 5) Teil einer kombinierten Anlage zur Heizung und/oder Kühlung des Raumes unterhalb der abgehängten Decke und Teil einer Sprinkleranlage ist, wobei die Decke Ausnehmungen für die Sprühköpfe (4) der Sprinkleranlage aufweist.

6. Verfahren nach einem der vorangehenden Ansprüche, **dadurch gekennzeichnet, dass** die Rohrleitungsanordnung (2, 5) mittels einstellbarer Aufhängeelemente (5) ausgerichtet und an der Gebäudedecke (1) befestigt wird, und dass die Decke (3, 7, 8) an den rohrleitungsseitigen Teilen der Aufhängeelemente (5) und/oder an den Rohren der Rohrleitungsanordnung (2, 5) befestigt wird.

7. Verfahren nach den Ansprüchen 2 und 3 oder 2 und 5, **dadurch gekennzeichnet, dass** der konstante Abstand zwischen Rohrleitung (2) und abgehängter Decke (3) aufgrund der Höhe der Sprühköpfe (4) bestimmt und mittels Abhängern (8) von im wesentlichen konstanter Länge eingestellt wird.

8. Abgehängte Decke in einem Raum eines Gebäudes, wobei zwischen abgehängter Decke (3) und Gebäudedecke (1) eine Rohrleitungsanordnung (2, 5) vorgesehen ist, **dadurch gekennzeichnet, dass** die abgehängte Decke an der Rohrleitungsanordnung befestigt ist.

9. Sprinkleranlage mit einer Rohrleitungsanordnung (2, 5), daran angeschlossenen Sprühköpfen (4) und einer ausgerichtet abgehängten Decke (3, 7, 8) an einer Gebäudedecke (1), **dadurch gekennzeichnet, dass** die Rohrleitungsanordnung (2, 5) gemäss dem vorgesehenen Verlauf der Decke (3, 7, 8) ausgerichtet ist, und dass die abgehängte Decke (3, 7, 8) in einem im wesentlichen konstanten Abstand an der Rohrleitungsanordnung (2, 5) befestigt ist, und dass die abgehängte Decke (3, 7, 8) Ausnehmungen für Sprühköpfe (4) aufweist.

10. Temperieranlage mit einer Rohrleitungsanordnung (2, 5) und einer ausgerichtet abgehängten Decke (3, 7, 8) an einer Gebäudedecke (1), **dadurch gekennzeichnet, dass** die Rohrleitungsanordnung (2, 5) gemäss dem vorgesehenen Verlauf der Decke (3, 7, 8) ausgerichtet ist, und dass die abgehängte Decke (3, 7, 8), vorzugsweise in einem im wesentlichen konstanten Abstand, an der Rohrleitungsanordnung (2, 5) befestigt ist.

11. Kombinierte Temperier- und Sprinkleranlage mit einer Rohrleitungsanordnung (2, 5), daran angeschlossenen Sprühköpfen (4) und einer ausgerichteten abgehängten Decke (3, 7, 8) an einer Gebäudedecke (1), **dadurch gekennzeichnet, dass** die Rohrleitungsanordnung (2, 5) gemäss dem vorgesehenen Verlauf der Decke (3, 7, 8) ausgerichtet ist, und dass die abgehängte Decke (3, 7, 8) in einem im wesentlichen konstanten Abstand an der Rohrleitungsanordnung befestigt ist, und dass die abgehängte Decke (3, 7, 8) Ausnehmungen für die Sprühköpfe (4) aufweist.

12. Kombinierte Temperier- und Sprinkleranlage gemäss Anspruch 11, **dadurch gekennzeichnet, dass** für die Sprinklerwasserzufuhr die selben Rohrleitungen (2) benutzt werden wie für den Temperierwasserkreislauf.

13. Kombinierte Temperier- und Sprinkleranlage gemäss Anspruch 12, **dadurch gekennzeichnet, dass** die Sprühköpfe mit Vorlauf (9) und Rücklauf (10) des Heizkreislaufs in Verbindung sind, wobei insbesondere von einer Pumpe (13) Wasser aus einem Vorratsbehälter (14) in Vor- und Rücklauf pumpbar ist und vorzugsweise die Temperieranlage (11) mit Rückschlagventilen (17, 18) geschützt ist.

14. Kombinierte Temperier- und Sprinkleranlage gemäss einem der Ansprüche 11 bis 13, **dadurch gekennzeichnet, dass** die Anlage einen Wasservorratsbehälter (14) der Sprinkleranlage aufweist und dieser Wasservorratsbehälter (14) zugleich als Wärmespeicher für die Temperieranlage nutzbar ist.

15. Anlage gemäss einem der Ansprüche 10 bis 14 **dadurch gekennzeichnet, dass** an den Rohrleitungen Abstrahlbleche (6), insbesondere aus Aluminium, befestigt sind.

16. Anlage gemäss einem der Ansprüche 9 bis 15 **dadurch gekennzeichnet, dass** die Rohrleitungsanordnung Rohre (2) aus Kupfer oder aus Edelstahl umfasst.

17. Anlage gemäss einem der Ansprüche 9 bis 16 **dadurch gekennzeichnet, dass** die abgehängte Decke (3, 7, 8) Deckenpaneele (3) umfasst, insbesondere Deckenpaneele aus Gips oder Karton oder Metall.

18. Anlage gemäss Anspruch 17, **dadurch gekennzeichnet, dass** die abgehängte Decke (3, 7, 8) und insbesondere die Deckenpaneele (3) schalldämpfend ausgestaltet sind.

19. Anlage gemäss Anspruch 17 oder 18, **dadurch gekennzeichnet, dass** die Deckenpaneele (3) auf parallel abgehängten T-Profilen (7) liegen.

20. Gebäude mit an der Gebäudedecke (1) befestigter Rohrleitungsanordnung (2, 5) und abgehängter Dekke (3, 7, 8), **dadurch gekennzeichnet, dass** die Rohrleitungen (2) der Rohrleitungsanordnung gemäss dem vorgesehenen Verlauf der abgehängten Decke (3, 7, 8) ausgerichtet sind, und dass die abgehängte Decke (3, 7, 8) von der Rohrleitungsanordnung (2, 5) getragen ist.

21. Gebäude gemäss Anspruch 20, **dadurch gekennzeichnet, dass** die Rohrleitungen (2) Teil einer Sprinkleranlage und/oder einer Temperieranlage sind.
